# EUROPEAN PATENT APPLICATION

(11) **EP 4 811 140 A1**
(43) Date of publication of application: **23.09.2026**
(21) Application number: 24902378.9
(22) Date of filing: 28.10.2024
(51) Int. Cl.: G06F 11/36, G06N 5/04

(54) **METHOD AND APPARATUS FOR TYPE INFERENCE OF PROGRAMMING LANGUAGE**

(30) Priority: 13.12.2023 RU 2023132940
(71) Applicant: Huawei Cloud Computing Technologies Co., Ltd., Guiyang, Guizhou 550025 (CN)
(72) Inventor: WANG, Yawei, Guiyang, Guizhou 550025 (CN); MIROSHNIKOV, Vladislav, Guiyang, Guizhou 550025 (CN); LUKIANOVA, Olga, Guiyang, Guizhou 550025 (CN); PETROCHENKO, Pavel, Guiyang, Guizhou 550025 (CN)
(74) Representative: Maiwald GmbH
(86) International application number: PCT/CN2024/127570
(87) International publication number: WO 2025/123954

(57) **Abstract**

This application provides a method and an apparatus for type inference of a programming language. The method includes: obtaining a to-be-inferred node in an abstract syntax tree during development of program code, where the to-be-inferred node indicates a to-be-inferred field in the program code, and the to-be-inferred field includes one of the following: a variable, a class, a function, or a parameter; obtaining a constraint related to the to-be-inferred node, where the constraint indicates a relationship related to the to-be-inferred node in the abstract syntax tree; and determining a type of the to-be-inferred node based on the constraint, where the type of the to-be-inferred node is one of the following: a number type, a sequence type, a mapping type, a set type, an iterator type, a context manager type, a module type, a metaclass type, a none type, or a callable type. The solutions of this application help reduce memory occupied for type inference.

## Description

This application claims priority to Russian Federation Patent Application No. 2023132940, filed with the Federal Service for Intellectual Property of the Russian Federation on December 13, 2023, and entitled "METHOD AND APPARATUS FOR TYPE INFERENCE OF PROGRAMMING LANGUAGE", which is incorporated herein by reference in its entirety.

### TECHNICAL FIELD

This application relates to the field of information technologies, and more specifically, to a method and an apparatus for type inference of a programming language.

### BACKGROUND

Type inference (type inference) of a programming language is an important way to improve program reliability, and plays an important role in program understanding, error prevention, and the like. An integrated development environment (integrated development environment, IDE) is used as an example. Type inference for programming language expressions is a basis of many IDE functions, for example, qualified parsing, code completion, and program semantic verification in source code. Therefore, type inference is one of the important tasks of a code model component of the IDE.

In a related solution, usually type inference needs to be performed based on an entire project. If the source code changes, type inference needs to be performed again for the entire project. Type inference occupies memory. In particular, a large amount of memory is occupied for type inference when a large project or a large quantity of files need to be processed, causing significant memory consumption.

### SUMMARY

This application provides a method and an apparatus for type inference of a programming language, to help reduce memory occupied for type inference.

According to a first aspect, a method for type inference of a programming language is provided. The method may be applied to an IDE, and the method includes: obtaining a to-be-inferred node in an abstract syntax tree during development of program code, where the to-be-inferred node indicates a to-be-inferred field in the program code, and the to-be-inferred field is one of the following: a variable, a class, a function, or a function; obtaining a constraint related to the to-be-inferred node, where the constraint indicates a relationship related to the to-be-inferred node in the abstract syntax tree; and determining a type of the to-be-inferred node based on the constraint, where the type of the to-be-inferred node includes one of the following: a number type, a sequence type, a mapping type, a set type, an iterator type, a context manager type, a module type, a metaclass type, a none type, or a callable type.

In the solutions in embodiments of this application, the type of the to-be-inferred node is inferred based on the constraint related to the to-be-inferred node. In other words, the type of the to-be-inferred node is determined based on the relationship related to the to-be-inferred node in the AST, and a type of an entire project does not need to be inferred. This helps reduce memory consumption, helps improve type inference efficiency, and implements real-time type refreshing, thereby improving user experience.

In addition, in the solutions in embodiments of this application, an inference result of the type of the to-be-inferred node is obtained based on the constraint related to the to-be-inferred node, to help implement incremental inference of the type, that is, incremental modification of the type. For example, when source code changes, type inference may be performed for only a source code file that has changed and a corresponding dependency, and the type of the entire project does not need to be inferred again.

Python is used as an example. The to-be-inferred node may include any one of the following: a variable node, a class node, a function node, a parameter node, or the like.

For example, the node constraint may include at least one of the following: a basic-class type constraint of the node, a resolved reference constraint of the node, an attribute reading constraint of the node, a default-value constraint of the node, an invocation constraint of the node, an assignment constraint of the node, a binary constraint of the node, a parameter transfer constraint of the node, or a return constraint of the node.

With reference to the first aspect, in some implementations of the first aspect, the type of the to-be-inferred node is used for at least one of the following: displaying the type of the to-be-inferred node, code completion, code refactoring, code inspection, or quick fix.

With reference to the first aspect, in some implementations of the first aspect, obtaining the to-be-inferred node in the abstract syntax tree includes: extracting a first inference item from an inference queue, where the first inference item is used to determine the type of the to-be-inferred node, and the inference queue includes one or more inference items; and obtaining the to-be-inferred node.

In embodiments of this application, the inference queue may be employed to process a type inference task, and type inference in a delay mode is allowed, thereby helping improve inference performance.

With reference to the first aspect, in some implementations of the first aspect, the constraint includes a resolved reference constraint of a first node in the abstract syntax tree, the resolved reference constraint of the first node indicates a reference relationship of the to-be-inferred node to the first node, and the method further includes: obtaining a type of the first node; and determining the type of the to-be-inferred node based on the constraint includes: determining the type of the to-be-inferred node based on the type of the first node and the constraint.

In the solutions of embodiments of this application, if the to-be-inferred node involves a reference to another node, a type of the referenced node is first obtained, and then the type of the to-be-inferred node is inferred based on the type of the referenced node, without a need to infer the type of the entire project.

With reference to the first aspect, in some implementations of the first aspect, the constraint includes an assignment constraint of a second node, the assignment constraint of the second node indicates an assignment relationship related to the second node, and a type of a child node to which a value is assigned in the second node is determined based on a type on a right-hand side of an assignment operator.

With reference to the first aspect, in some implementations of the first aspect, the constraint includes an attribute reading constraint of a third node, the attribute reading constraint of the third node indicates a subordinate relationship related to the third node, and a type of an owner of an attribute in the third node includes a type of the attribute.

With reference to the first aspect, in some implementations of the first aspect, the method further includes: creating a type variable corresponding to the to-be-inferred node; and determining the type of the to-be-inferred node based on the constraint includes: determining, based on the constraint, a value of the type variable corresponding to the to-be-inferred node, where the value of the type variable corresponding to the to-be-inferred node indicates the type of the to-be-inferred node.

The new type variable created may be referred to as a unique free type variable. The unique free type variable is a variable that is currently unassociated with any other specific type.

The Python language is used as an example. For example, the to-be-inferred field may include any one of the following: a class, a static variable, an instance-type variable, a function, a parameter, or a return value. A new type variable may be created separately for the class, the static variable, the instance-type variable, the function, the parameter, the return value, or the like.

With reference to the first aspect, in some implementations of the first aspect, the method further includes: storing the type of the to-be-inferred node into a type environment, where the type environment is used to store the types of nodes in the abstract syntax tree.

With reference to the first aspect, in some implementations of the first aspect, the method further includes: outputting an inference result, where the inference result indicates the type of the to-be-inferred node.

According to a second aspect, an apparatus for type inference of a programming language is provided. The apparatus is applied to an integrated development environment IDE, and the apparatus includes: a first obtaining module, configured to obtain a to-be-inferred node in an abstract syntax tree during development of program code, where the to-be-inferred node indicates a to-be-inferred field in the program code, and the to-be-inferred field includes one of the following: a variable, a class, a function, or a parameter; a second obtaining module, configured to obtain a constraint related to the to-be-inferred node, where the constraint indicates a relationship related to the to-be-inferred node in the abstract syntax tree; and a processing module, configured to determine a type of the to-be-inferred node based on the constraint, where the type of the to-be-inferred node includes at least one of the following: a number type, a sequence type, a mapping type, a set type, an iterator type, a context manager type, a module type, a metaclass type, a none type, or a callable type.

With reference to the second aspect, in some implementations of the second aspect, the type of the to-be-inferred node is used for at least one of the following: displaying the type of the to-be-inferred node, code completion, code refactoring, code inspection, or quick fix.

With reference to the second aspect, in some implementations of the second aspect, the first obtaining module is specifically configured to: extract a first inference item from an inference queue, where the first inference item is used to determine the type of the to-be-inferred node, and the inference queue includes one or more inference items; and obtain the to-be-inferred node.

With reference to the second aspect, in some implementations of the second aspect, the constraint includes a resolved reference constraint of a first node in the abstract syntax tree, the resolved reference constraint of the first node indicates a reference relationship of the to-be-inferred node to the first node, the method further includes a third obtaining module configured to obtain a type of the first node, and the processing module is specifically configured to determine the type of the to-be-inferred node based on the type of the first node and the constraint.

With reference to the second aspect, in some implementations of the second aspect, the constraint includes an assignment constraint of a second node, the assignment constraint of the second node indicates an assignment relationship related to the second node, and a type of a child node to which a value is assigned in the second node is determined based on a type on a right-hand side of an assignment operator.

With reference to the second aspect, in some implementations of the second aspect, the constraint includes an attribute reading constraint of a third node, the attribute reading constraint of the third node indicates a subordinate relationship related to the third node, and a type of an owner of an attribute in the third node includes a type of the attribute.

With reference to the second aspect, in some implementations of the second aspect, the apparatus further includes a creation module, configured to create a type variable corresponding to the to-be-inferred node; and the processing module is specifically configured to: determine, based on the constraint, a value of the type variable corresponding to the to-be-inferred node, where the value of the type variable corresponding to the to-be-inferred node indicates the type of the to-be-inferred node.

With reference to the second aspect, in some implementations of the second aspect, the apparatus further includes a storage module, configured to store the type of the to-be-inferred node into a type environment, where the type environment is used to store the types of nodes in the abstract syntax tree.

It should be understood that extensions to, limitations on, explanations for, and descriptions of related content in the first aspect are also applicable to same content in the second aspect.

According to a third aspect, a compute device cluster is provided. The compute device cluster includes at least one compute device, and each compute device includes a processor and a memory. The processor of the at least one compute device is configured to execute instructions stored in the memory of the at least one compute device, to enable the compute device cluster to perform the method in any one of the first aspect and the implementations of the first aspect.

According to a fourth aspect, a computer-readable medium is provided. The computer-readable medium includes computer program instructions. When the computer program instructions are executed by a compute device cluster, the compute device cluster performs the method in any one of the first aspect and the implementations of the first aspect.

According to a fifth aspect, a computer program product including instructions is provided. When the instructions are run by a compute device cluster, the compute device cluster is enabled to perform the method in any one of the first aspect and the implementations of the first aspect.

### BRIEF DESCRIPTION OF DRAWINGS

FIG. 1 is a schematic flowchart of a method for type inference of a programming language according to an embodiment of this application;
FIG. 2 is a diagram of an assignment constraint according to an embodiment of this application;
FIG. 3 is a schematic flowchart of another method for type inference of a programming language according to an embodiment of this application;
FIG. 4 is a block diagram of an apparatus for type inference of a programming language according to an embodiment of this application;
FIG. 5 is a block diagram of a compute device according to an embodiment of this application;
FIG. 6 is a block diagram of a compute device cluster according to an embodiment of this application; and
FIG. 7 is a block diagram of another compute device cluster according to an embodiment of this application.

### DESCRIPTION OF EMBODIMENTS

The following describes technical solutions of this application with reference to accompanying drawings.

Terms used in the following embodiments are merely intended to describe specific embodiments, but are not intended to limit this application. The terms "one", "a", and "this" of singular forms used in this specification and the appended claims of this application are intended to include a form like "one or more", unless otherwise specified in the context clearly. It should be further understood that, in the following embodiments of this application, "at least one" and "one or more" mean one, two, or more. "First", "second", and various numbers are merely intended for distinguishing for ease of description, and are not intended to limit the scope of embodiments of this application. "And/or" describes a correspondence between objects that correspond to each other, and indicates that three relationships may exist. For example, "A and/or B" may indicate the following three cases: Only A exists, only B exists, and both A and B exist, where A and B may be singular or plural. The character "/" generally indicates an "or" relationship between the associated objects. Sequence numbers of the following processes do not mean an execution sequence. The execution sequence of the processes should be determined based on functions and internal logic of the processes, and should not constitute any limitation on an implementation process in embodiments of this application. For example, in embodiments of this application, the terms "301", "401", "501", and the like are merely identifiers for ease of description, and are not intended to limit an execution sequence of steps.

Reference to "an embodiment", "some embodiments", or the like described in this specification means that one or more embodiments of this application include a specific feature, structure, or characteristic described with reference to the embodiments. In this application, a term such as "example" or "for example" is used to represent giving an example, an illustration, or a description. Any embodiment or design scheme described as an "example" or "for example" in this application should not be explained as being preferred to or having more advantages than another embodiment or design scheme. To be precise, use of the term such as "example" or "for example" is intended to present a relative concept in a specific manner. The terms "include", "have", and their variants all mean "include but are not limited to", unless otherwise specifically emphasized in another manner. In embodiments of this application, descriptions such as "when", "in a case", and "if" all mean that a device performs corresponding processing in a specific objective situation, but are not intended to limit time, do not require the device to have a determining action during implementation, and do not mean any other limitation.

In this application, "indicate" may include "directly indicate" and "indirectly indicate". When a piece of indication information indicates A, the indication information may directly indicate A or indirectly indicate A, but it does not indicate that the indication information definitely carries A.

To help a person skilled in the art better understand the technical solutions of this application, the following first describes some terms that may be used in embodiments of this application.

### 1. Integrated development environment (integrated development environment, IDE)

The IDE is an application that provides a program development environment. It usually includes tools such as a code editor, a compiler, a debugger, and a graphical user interface, and is a software development service suite that integrates code writing, analysis, compilation, debugging, and other functions.

The IDE may include a local IDE and a web (web) IDE.

The local IDE may be also referred to as a desktop IDE. The local IDE is installed in a local development operating environment of a user. For example, the local development operating environment may be a terminal device, such as a desktop computer, a laptop computer, or a mobile phone.

The web IDE means an online IDE service, including an IDE front end and an IDE back end. The IDE back end runs in a remote environment. For example, the remote environment may be a cloud server, that is, the IDE is provided in a form of a cloud service for the user. The user may purchase the cloud service by accessing a web page, and a cloud service provider creates an IDE instance. The user may perform program development based on the IDE instance.

### 2. Abstract syntax tree (abstract syntax tree, AST)

The AST may be referred to as a syntax tree (syntax tree) for short, and is an abstract representation of a syntax structure of source code. The AST represents the syntax structure of the source code in a form of a tree. Each node in the tree represents a structure of the source code, such as a variable declaration, an expression, function invocation, or a control structure. A root node of the tree usually represents an entire source code file, and child nodes represent specific syntax elements and their relationships.

Syntax is "abstract" because the syntax does not represent every detail of real syntax. For example, nested parentheses are hidden in the structure of the tree and are not presented in a node form. A conditional jump statement similar to if-condition-then may be represented by using a node with three branches.

The AST has a wide range of functions, for example, may be used for code syntax check, code highlighting, code error check, code completion, code optimization, code fixing, code generation, and code refactoring.

Type inference of a static language (for example, Java or C#) is mainly done by a compiler. A code model may obtain required type information through type binding. Type binding usually exists in metadata (metadata) of a program.

Type inference of a dynamic language is mainly done by an IDE. Due to a lack of support for compiling metadata, type inference of a dynamic language is a challenge in the industry. Python is used as an example. Python has a fully dynamic and strict type system. A type (type) is dynamically bound to a variable (variable) at runtime. Variables and types may be dynamically changed at runtime. This increases difficulty in implementing reliable type inference.

Some related solutions can implement type inference of a dynamic language. For example, type inference of a dynamic language is implemented in a manner of type inference of a static language, that is, metadata (a .pyi file) of a program is generated through parsing and then required type information is obtained based on the metadata. In a current solution, type inference needs to be performed based on an entire project. If the source code changes, type inference needs to be performed again for the entire project. Memory needs to be occupied for type inference. In particular, a large amount of memory is occupied for type inference when a large project or a large quantity of files need to be processed, causing significant memory consumption.

In view of this, embodiments of this application provide a method for type inference of a programming language, to help reduce memory consumption.

The method in embodiments of this application may be applied to a scenario in which type inference needs to be performed for a programming language.

For example, solutions in examples of this application may be applied to a scenario in which a type of a field needs to be displayed. For example, when a cursor hovers over a variable, a type of the variable may be displayed. The type of the variable may be determined by using the method in embodiments of this application.

For example, the solutions in embodiments of this application may be applied to a scenario in which subsequent processing needs to be performed based on a type of a programming language. For example, the solutions in embodiments of this application may be applied to a scenario such as code completion, code refactoring, code inspection, or quick fix.

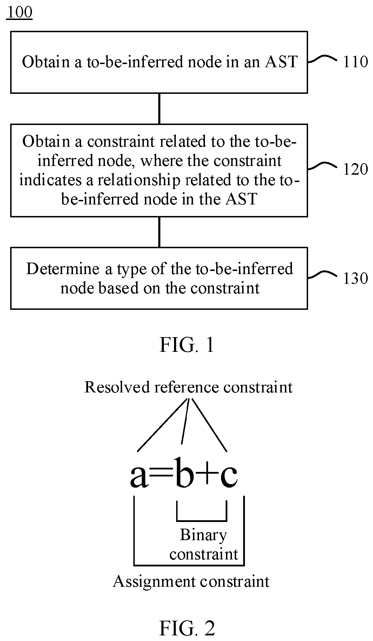

FIG. 1 is a method for type inference of a programming language according to an embodiment of this application. The method 100 shown in FIG. 1 may be performed by an apparatus for type inference of a programming language.

For example, the apparatus for type inference of a programming language may be a development tool or a functional module of the development tool. For example, the development tool may be an IDE, that is, the method 100 may be applied to the IDE.

For example, the apparatus for type inference of a programming language may alternatively be an apparatus used in cooperation with a development tool.

The IDE may include a desktop IDE or a web IDE. A back end of the web IDE runs in a remote environment. For example, the remote environment may be a cloud server.

The foregoing are merely examples. The solutions in embodiments of this application may also be performed by another apparatus. This is not limited in embodiments of this application.

As shown in FIG. 1, the method 100 includes the following steps.

110: Obtain a to-be-inferred node in an AST.

120: Obtain a constraint related to the to-be-inferred node, where the constraint indicates a relationship related to the to-be-inferred node in the AST.

130: Determine a type of the to-be-inferred node based on the constraint.

In the solutions in embodiments of this application, the type of the to-be-inferred node is inferred based on the constraint related to the to-be-inferred node. In other words, the type of the to-be-inferred node is determined based on the relationship related to the to-be-inferred node in the AST, and a type of an entire project does not need to be inferred. This helps reduce memory consumption, helps improve type inference efficiency, and implements real-time type refreshing, thereby improving user experience.

In addition, in the solutions in embodiments of this application, an inference result of the type of the to-be-inferred node is obtained based on the constraint related to the to-be-inferred node, to help implement incremental inference of the type, that is, incremental modification of the type. For example, when source code changes, type inference may be performed for only a source code file that has changed and a corresponding dependency, and the type of the entire project does not need to be inferred again.

In step 110, the to-be-inferred node may indicate a to-be-inferred field in a code segment. The type of the to-be-inferred node is a type of the to-be-inferred field.

For example, Python is used as an example. The to-be-inferred node may include any one of the following: a variable node, a class node, a function node, a parameter node, or the like. The to-be-inferred field may include any one of the following: a variable, a class, a function, or a parameter.

Accordingly, the type of the to-be-inferred node may include any one of the following: a type of a variable, a type of a parameter, a type of a class, and a type of a function.

For example, Python is used as an example, and the type of the to-be-inferred node includes at least one of the following: a number (number) type, a sequence (sequence) type, a mapping (mapping) type, a set (set) type, an iterator (iterator) type, a context manager (context manager) type, a module (module) type, a metaclass (metaclass) type, a none (none) type, or a callable (callable) type.

For example, the number type may include any one of the following: an integer type, a floating-point number type, a complex number type, a Boolean (bool) type, a long integer type, or the like.

For example, the sequence type may include any one of the following: a string (string) type, a list (list) type, a tuple (tuple) type, or a byte (byte) type.

For example, the mapping type may include a dictionary type.

For example, the set type may include a set and an immutable set.

For example, the callable type may include a function, a method, or a class.

For example, the iterator type may include any of the following: a generator (generator), a generator function (generator function), or a built-in iterator.

For example, the context manager type may include an object that implements the methods enter() and exit().

For example, the module type may include any one of the following: a module (module) or a package (package).

For example, the type of a variable or the type of a parameter may include any one of the following: a number type, a sequence type, a mapping type, a set type, or a none type.

For example, the type of a function may include a callable type. Further, the type of a function may further include a type of a parameter of the function and a type of a return value.

Further, the type of the to-be-inferred node may further include: any type or an unknown type.

It should be understood that the foregoing are merely examples, which do not constitute a limitation on a type of a field in embodiments of this application.

In the solutions in embodiments of this application, a "function" in code may also be referred to as a "method". This is not distinguished in embodiments of this application.

There may be one or more to-be-inferred nodes. A quantity of to-be-inferred nodes is not limited in embodiments of this application.

There may be one or more constraints related to the to-be-inferred node. A quantity of constraints is not limited in embodiments of this application.

It should be noted that if there are a plurality of to-be-inferred nodes, the to-be-inferred nodes may be obtained all at once, or may be obtained for a plurality of times. This is not limited in embodiments of this application.

The method 100 may be applied to development of program code.

The method 100 may be triggered in a plurality of manners.

In a possible implementation, the method 100 may be triggered by an operation of opening a source code file.

For example, a task of type inference has not been performed previously for the source code file, and the method 100 is triggered for execution when a user opens the source code file.

The AST may be an AST corresponding to the source code file. The to-be-inferred node may be some or all nodes in the AST.

If the source code file is large, performing type inference on all code in the source code file at once may occupy a large amount of memory and affect processing efficiency. In the solutions in embodiments of this application, type inference may be performed on some code in the source code file. In other words, code blocks in the source code file may be processed, and the entire source code file does not need to be processed all at once, thereby helping reduce memory consumption and helping ensure processing efficiency.

For example, the to-be-inferred node may be a node corresponding to a field in a code segment that is displayed in a target region.

In this way, type inference may be performed on the code segment that is of the source code file and that is displayed in the target region.

If the source code file is large, the code in the source code file may be unable to be displayed on a same interface. In this case, type inference may be performed on a code segment that is displayed in a same region (for example, the target region).

For example, the method 100 may be performed by an IDE, and the target region may be a code editing box in the IDE. After the source code file is opened, the method 100 may be performed on a code segment currently displayed in the code editing box. For example, a node corresponding to a field in the code segment currently displayed in the code editing box serves as the to-be-inferred node, and the method 100 is performed based on the to-be-inferred node, to obtain an inference result of a type of the code segment currently displayed in the code editing box. The inference result may be presented to the user.

In a possible implementation, the method 100 may be triggered by a mouse event.

For example, the method 100 may be triggered by any one or more of the following: a mouse hovering operation, a mouse clicking operation, a mouse double-click operation, or the like.

For example, the method 100 is triggered by a mouse hovering operation. For example, if the user needs to obtain a type of a variable, the user may hover a mouse over the variable. The method 100 is performed in response to the mouse hovering operation. For example, a node corresponding to the variable serves as the to-be-inferred node, and the method 100 is performed based on the to-be-inferred node, to obtain an inference result of the type of the variable, and the inference result is presented to the user.

In a possible implementation, the method 100 may be triggered by a keyboard event.

For example, the method 100 may be triggered by an operation of pressing a preset key.

For example, if the user needs to obtain a type of a code segment on a current interface, the user presses the preset key. In response to the operation, the method 100 is performed. For example, a node of a field in the code segment on the current interface serves as the to-be-inferred node, and the method 100 is performed based on the to-be-inferred node, to obtain an inference result of a type of the code segment on the current interface, and the inference result is presented to the user.

For another example, if the user needs to obtain a type of a code segment, the user may select the code segment, and press the preset key. In response to the operation, the method 100 is performed. For example, a node of a field in the selected code segment serves as the to-be-inferred node, and the method 100 is performed based on the to-be-inferred node, to obtain an inference result of a type of the selected code segment, and the inference result is presented to the user.

It should be understood that the foregoing triggering manners are merely examples, and do not constitute a limitation on the solutions in embodiments of this application.

Optionally, the type of the to-be-inferred node is indicated by a value of a type variable corresponding to the to-be-inferred node.

Inferring the type of the to-be-inferred node is inferring the value of the type variable corresponding to the to-be-inferred node.

A type variable describes a type. A type variable may be understood as expressing a type by using a variable. In other words, a type may be used as a variable, and the variable is a type variable. A value of a type variable corresponding to a node may indicate a type of the node. For example, a value of a type variable corresponding to a function node indicates a type of the function. For another example, a value of a type variable corresponding to a parameter node indicates a type of the parameter.

Optionally, the method 100 may further include: creating a corresponding type variable separately for the to-be-inferred node.

This step may also be referred to as type variable initialization. The type variable initialization may be performed based on class declaration, variable declaration, method declaration, parameter declaration, or the like in the code segment.

Specifically, a new type variable is separately created for the to-be-inferred node. For example, the to-be-inferred node may come from nodes, such as class declaration, variable declaration, method declaration, and parameter declaration, in the code segment.

The new type variable created may be referred to as a unique free type variable. The unique free type variable is a variable that is currently unassociated with any other specific type. The types associated with such variables, namely, values of unique free variables, need to be obtained through inference. In other words, the type variable of the to-be-inferred node is unassociated with any other specific type.

The Python language is used as an example. For example, the to-be-inferred field may include any one of the following: a class, a static variable, an instance-type variable, a function, a parameter, or a return value. A new type variable may be created separately for the class, the static variable, the instance-type variable, the function, the parameter, the return value, or the like.

It should be understood that the foregoing are merely examples, and a type of a node may alternatively be expressed in another form. This is not limited in embodiments of this application.

A constraint may be used to describe a relationship in a code segment. For example, relationships in a Python program code segment may include: assignment, function invocation, class instance creation, binary operation, or the like.

Python is used as an example. For example, the constraint may include at least one of the following: a basic-class type constraint, a resolved reference constraint (resolved reference constraint), an attribute reading constraint, an assignment constraint (assignment constraint), a binary constraint (binary constraint), a default-value constraint, a parameter transfer constraint, an invocation constraint, or a return constraint.

For example, the constraint includes a basic-class type constraint of a node #1, and the basic-class type constraint of the node #1 indicates that the node #1 is a basic class.

For another example, the constraint includes a resolved reference constraint of a node #2 (an example of a first node), and the resolved reference constraint of the node #2 indicates a reference relationship to the node #2.

For another example, the constraint includes an attribute reading constraint of a node #3 (an example of a third node), and the attribute reading constraint of the node #3 indicates a subordinate relationship of the node #3.

For another example, the constraint includes a default-value constraint of a node #4, and the default-value constraint of the node #4 indicates that a default value is assigned to the node #4.

For another example, the constraint includes an invocation constraint of a node #5, and the invocation constraint of the node #5 indicates that the node #5 is a callable function.

For another example, the constraint includes an assignment constraint of a node #6 (an example of a second node), and the assignment constraint of the node #6 indicates an assignment relationship corresponding to the node #6.

For another example, the constraint includes a binary constraint of a node #7, and the binary constraint of the node #7 indicates a binary operation relationship corresponding to the node #7.

For another example, the constraint includes a parameter transfer constraint of a node #8, and the parameter transfer constraint of the node #8 indicates a parameter transfer relationship corresponding to the node #8.

For another example, the constraint includes a return constraint of a node #9, and the return constraint of the node #9 indicates a return relationship corresponding to the node #9.

The constraint may be obtained in a plurality of manners.

For example, the constraint may be created in advance. In this case, step 120 may include: reading the constraint.

For example, the constraint may be created during execution of the method 100. In this case, step 120 may include: creating the constraint. The constraint may be created based on a relationship between syntax elements indicated by the AST.

For example, creating the constraint may include at least one of the following:
creating a basic-class type constraint for a node that belongs to the basic class;
creating a resolved reference constraint for a node that involves reference;
creating an attribute reading constraint for a node that involves a subordinate relationship;
creating a default-value constraint for a node that is set to a default value;
creating an invocation constraint for a node that involves function invocation;
creating an assignment constraint for a node that involves an assignment relationship;
creating a binary constraint for a node that involves a binary operation;
creating a parameter transfer constraint for a node that involves a parameter transfer relationship; or
creating a return constraint for a node that serves as a return value.

For example, when a node #1 is the basic class, a basic-class type constraint is created for the node #1.

For example, the AST involves a reference to a node #2, and a resolved reference constraint is created for the node #2.

An attribute reading constraint is created for a node that involves a subordinate relationship, that is, an attribute reading constraint is created for a node that involves attribute reading.

For example, a node #3 in the AST involves a subordinate relationship, and an attribute reading constraint is created for the node #3.

For example, a default value is assigned to a node #4 in the AST, and a default-value constraint is created for the node #4.

For example, a node #5 in the AST is a callable function, and an invocation constraint is created for the node #5.

For example, a node #6 in the AST corresponds to an assignment statement, and an assignment constraint is created for the node #6.

For example, a node #7 in the AST corresponds to an expression of a binary operation, and a binary constraint is created for the node #7.

For example, a node #8 in the AST involves parameter transfer of a function, and a parameter transfer constraint is created for the node #8.

For example, a node #9 in the AST corresponds to a return statement, and a return constraint is created for the node #9.

The constraint related to the to-be-inferred node may include a constraint directly related to the to-be-inferred node. The constraint directly related to the to-be-inferred node may be understood as that the constraint indicates a relationship between the to-be-inferred node and another syntax element.

Further, the constraint related to the to-be-inferred node may further include a constraint indirectly related to the to-be-inferred node.

The constraint indirectly related to the to-be-inferred node may include a plurality of nested constraints that are obtained by decomposing the constraint directly related to the to-be-inferred node.

FIG. 2 is a diagram of an assignment constraint according to an embodiment of this application. The following describes, with reference to FIG. 2, constraints related to a variable "a". To describe this solution more intuitively, the following mainly uses a code fragment as an example for description. In an actual execution process, relationships between various syntax elements may be obtained by using the AST, and each constraint may be created based on a node. For example, creating an assignment constraint for "a=b+c" is creating an assignment constraint for an assignment node corresponding to "a=b+c". For another example, creating a resolved reference constraint for the variable "b" is creating a resolved reference constraint for a node (namely, a variable node "b") of the variable "b". For ease of description, this is not distinguished in embodiments of this application.

For example, the code fragment "a=b+c" shown in FIG. 2 is an assignment statement and involves an assignment relationship, and an assignment constraint is created for "a=b+c". The assignment constraint may be considered as a constraint directly related to the variable "a".

As shown in FIG. 2, the assignment constraint may be decomposed into the following nested constraints: "b" and "c" are referenced variables, and a resolved reference constraint is created for "b" and "c"; and "b+c" involves a binary operation, and a binary constraint is created for "b+c". The resolved reference constraint and the binary constraint may be considered as constraints indirectly related to the variable "a". In addition, "a" may also be considered as a referenced variable, and a resolved reference constraint is created for "a".

It should be understood that the foregoing uses only Python as an example for description, and does not constitute a limitation on the solutions in embodiments of this application. The solutions in embodiments of this application may be further applied to type inference of another dynamic language.

The constraint may alternatively be obtained in another manner. This is not limited in embodiments of this application.

Optionally, if the constraint includes a resolved reference constraint, a type of a dependency indicated by the resolved reference constraint is obtained.

In other words, if the to-be-inferred node involves a reference to another node, and the referenced node is a dependency, a type of the dependency is first obtained, and then the type of the to-be-inferred node may be determined based on the type of the dependency.

For example, the resolved reference constraint of a node #2 indicates a reference to the node #2. The node #2 is a dependency. The method 100 may include: obtaining a node type of the node #2. Step 130 may include: determining the type of the to-be-inferred node based on the type of the node #2 and the constraint.

If the resolved reference constraint indicates a plurality of dependencies, the types of the plurality of dependencies may be obtained in a same manner or different manners.

Further, optionally, the method 100 may include: determining whether the type of the dependency has been inferred.

Optionally, whether the type of the dependency has been inferred may be determined based on a type environment. The type environment may be used to store the types of nodes in the AST.

In other words, the type environment may be used to store the types of fields in the source code file.

For example, a type of a node may be indicated by a value of a type variable corresponding to the node. In this case, the type environment may be used to store the values of type variables.

For example, determining whether a type of a node is inferred may be determining whether a value of a type variable corresponding to the node exists in the type environment. If the value exists, the type of the node has been inferred. If the value does not exist, the type of the node has not been inferred.

If the type of the dependency has been inferred previously, obtaining the type of the dependency may include reading the type of the dependency.

If the type of the dependency has not been inferred, obtaining the type of the dependency may include inferring the type of the dependency. For example, if a type of a dependency has not been inferred, a current inference process is stopped, to turn to inference of the type of the dependency. The method 100 may be used to determine the type of the dependency, that is, the dependency is used as the to-be-inferred node, to obtain the type of the dependency.

After inference of the types of all the dependencies indicated by the resolved reference constraint is completed, the type of the to-be-inferred node is determined based on the types of all the dependencies and a constraint other than the resolved reference constraint in the constraints. If the type of the to-be-inferred node is indicated by the value of the type variable, determining the type of the to-be-inferred node is determining the value of the type variable of the to-be-inferred node.

In the solutions in embodiments of this application, the type of the to-be-inferred field may be inferred based on the type of the dependency without a need to infer the type of the entire project.

The following describes the processing of a constraint other than the resolved reference constraint.

For example, if the constraint includes a basic-class type constraint of a node #1, a type of the node #1 includes the basic class.

For example, if the constraint includes an attribute reading constraint of a node #3, a type of an attribute in the node #3 comes from a type of an owner of the attribute. In other words, the type of the owner of the attribute in the node #3 includes the type of the attribute.

For example, the type of the attribute may be determined based on the type of the owner. If the type of the owner is known, the type of the attribute may be requested from the type of the owner, that is, the type of the attribute may be requested through a type of a qualifier.

For another example, the type of the owner may be determined based on the type of the attribute. If the type of the owner is unknown, the type of the owner of the attribute may be determined based on the type of the attribute, that is, the type of the owner includes the type of the attribute.

For example, if the constraint includes a default-value constraint of a node #4, a type of the node #4 may be determined based on a type of a default value.

For example, if the constraint includes an invocation constraint of a node #5, a type of the node #5 is a callable function.

For example, if the constraint includes an assignment constraint of a node #6, a type of a child node to which a value is assigned in the node #6 is determined based on a type on a right-hand side of an assignment operator "=".

Further, the type of the child node to which the value is assigned is obtained by performing a unification/unionization (unification/unionization) operation on a current type of the child node to which the value is assigned and the type on the right-hand side of the assignment operator "=". The current type of the child node to which the value is assigned may be referred to as a type on a left-hand side of the assignment operator "=".

If the current type of the child node is a specific type, for example, the type of the child node has been defined as a type A previously, after the type (namely, the type A) on the left-hand side of "=" and the type (for example, a type B) on the right-hand side of "=" are unified (A|B), an obtained type of the child node may include the type on the left-hand side of "=" or the type on the right-hand side of "=", that is, the type of the child node may include the type A or the type B. If the current type of the child node is unknown, the type of the child node may include the type on the right-hand side of "=".

For example, if the constraint includes a parameter transfer constraint of a node #8, a type of a parameter child node of the node #8 is determined based on a parameter transfer relationship of the node #8.

For example, if the constraint includes a return constraint of a node #9, a type of a return value related to the node #9 is a type of a return result of the node #9.

The following describes an example of a process of inferring a type of the variable "a" with reference to FIG. 2.

As shown in FIG. 2, the process of inferring the type of the variable "a" may include the following steps.
(1) Infer the types of "b" and "c".

As described previously, the constraints in FIG. 2 include a resolved reference constraint. Dependencies indicated by the resolved reference constraint include "b" and "c". First, the types of "b" and "c" are inferred.

(2) Infer a type of an add operation (add operation).

The constraints in FIG. 2 further include a binary constraint. The binary operation indicates a binary add operation between b and c. The type of the add operation is inferred based on the binary operation.

(3) Obtain a current type of the variable "a" or a type variable of "a".

The constraints in FIG. 2 include a resolved reference constraint. Dependencies indicated by the resolved reference constraint may include "a", and a type of "a" is obtained. If the type of the variable "a" has been defined previously, the current type of the variable "a" is obtained.

If the variable "a" has not been inferred previously, the type variable of the variable "a" is obtained.

(4) Determine the type of the variable "a" based on the type obtained in step (2) and the type obtained in step (3).

The constraints in FIG. 2 further include an assignment constraint. The type obtained in step (2) is the type on the right-hand side of "=". The type obtained in step (3) is the type on the left-hand side of "=".

An inference result of the type of the variable "a" is a union of the type obtained in step (2) and the type obtained in step (3).

For example, the type of the add operation obtained in step (2) is t1, the current type of the variable "a" obtained in step (3) is t2, and t1 and t2 are unified: {t2|t1}. The inference result of the type of the variable "a" includes t1 or t2, that is, the type of the variable "a" includes t1 or t2.

For another example, the type of the add operation obtained in step (2) is t1, and the type variable of "a" obtained in step (3) is t3. Then t1 and the type variable t3 are unified to obtain t3={t1}, and a value of the type variable t3 includes t1, that is, the type of the variable "a" includes t1.

Further, the method 100 may further include: determining whether the type of the to-be-inferred node has been inferred.

If the type of the to-be-inferred node has not been inferred, step 130 may be performed.

Determining whether the type of the to-be-inferred node has been inferred may include: determining whether the types of some nodes in the to-be-inferred node have been inferred. Alternatively, determining whether the type of the to-be-inferred node has been inferred may include: determining whether the types of all nodes in the to-be-inferred node have been inferred.

For example, the to-be-inferred node includes a root node in the AST. If a type of the root node has not been inferred, step 130 may be performed. If the type of the root node has already been inferred, step 130 is not performed.

Whether the type of the root node has been inferred may be determined based on the type environment. For example, the type environment is checked. If the type of the root node exists in the type environment, it indicates that the type of the root node has been inferred. If the type of the root node does not exist in the type environment, it indicates that the type of the root node has not been inferred. If the type of the root node has been inferred, an inference task has been executed previously for the source code file and an inference result may be directly output. The inference result may be determined based on the type environment.

In this way, repeated type inference can be avoided, thereby further reducing memory consumption and improving inference efficiency.

Further, the method 100 may further include: creating a first inference item, and adding the first inference item to an inference queue. The first inference item is used to determine the type of the to-be-inferred node.

In other words, the first inference item indicates an inference task of the type of the to-be-inferred node.

Optionally, step 110 may include: extracting the first inference item from the inference queue, and obtaining the to-be-inferred node.

The inference queue is a queue used to store inference items. The inference queue includes one or more inference items. An inference item indicates an inference task of a type.

The inference queue may use a first in first-out (first-in first-out, FIFO) data structure.

In embodiments of this application, the inference queue may be employed to process a type inference task, and type inference in a delay mode is allowed, thereby helping improve inference performance. The delay mode may also be referred to as a lazy mode (lazy mode).

For example, in step 130, if the type of the dependency has not been inferred, an inference process of the first inference item is stopped, a second inference item is created, and the second inference item is added to the inference queue. The second inference item indicates an inference task of the type of the dependency.

The "first inference item" and the "second inference item" are intended only to distinguish between inference tasks of the types of different nodes, and have no other purpose of limitation.

If the types of a plurality of dependencies indicated by the resolved reference constraint have not been inferred, inference items may be separately created for the plurality of dependencies, and the inference items corresponding to the plurality of dependencies are all added to the inference queue. The inference items corresponding to the plurality of dependencies may all be considered as second inference items.

After the inference items corresponding to all the dependencies are extracted from the inference queue and finish inference, the first inference item continues to be processed.

Further, the method 100 may further include: storing the type of the to-be-inferred node into the type environment.

Further, the method 100 may further include: outputting an inference result, where the inference result indicates the type of the to-be-inferred node.

For example, outputting the inference result may include: displaying the type of the to-be-inferred node.

Optionally, the type of the to-be-inferred node may be further used for at least one of the following: code completion, code refactoring, code inspection, or quick fix.

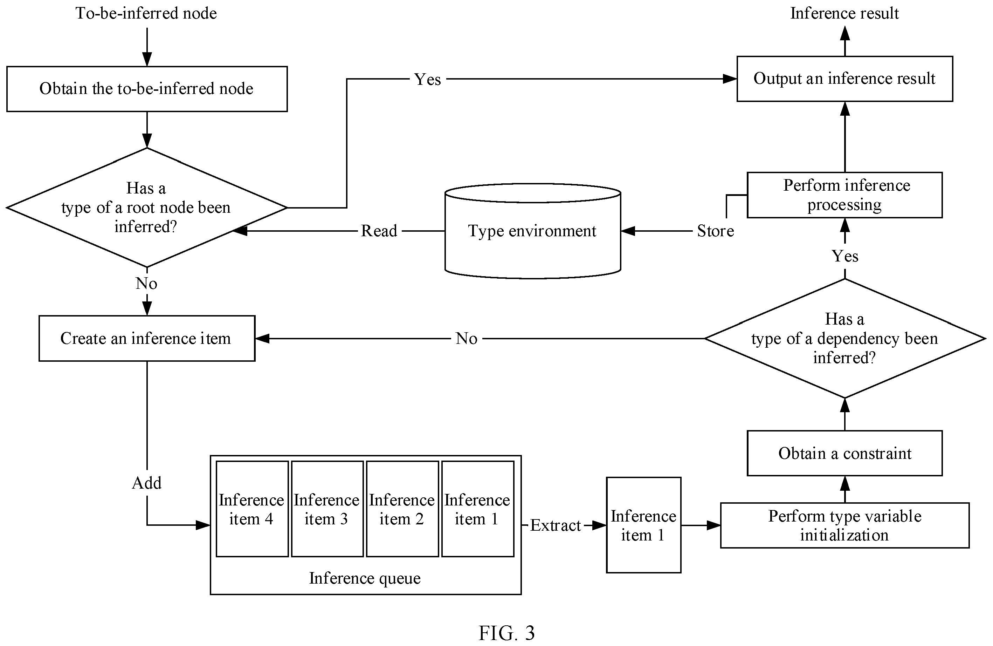

FIG. 3 is a method for type inference of a programming language according to an embodiment of this application. The method 300 shown in FIG. 3 may be considered as a specific implementation of the method 100. For related descriptions, refer to the method 100. To avoid repetition, some descriptions of the method 300 are appropriately omitted.

To better describe the solutions in embodiments of this application, the following mainly illustrates the method 300 by using an example with reference to the following Python code. For example, the method 300 may be triggered by an operation of opening a source code file. A code segment #1 may be a code segment currently displayed in an IDE code editing box. The method 300 is mainly described by using this scenario as an example, which does not constitute a limitation on the solutions in embodiments of this application.

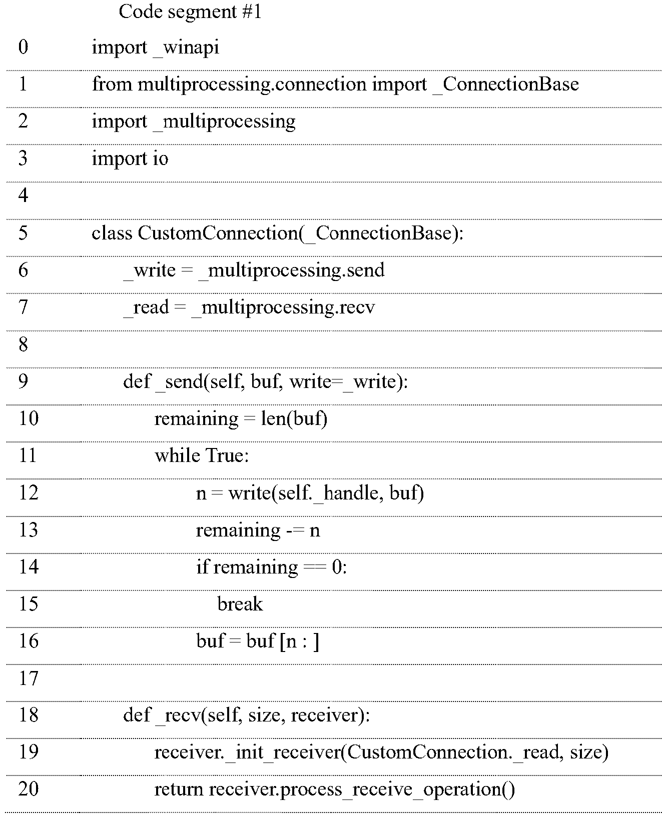

310: Obtain a to-be-inferred node in an AST.

320: Determine whether a type of a root node in the AST has been inferred.

The root node is obtained from the AST, and whether the type of the root node has been inferred is determined based on a type environment.

For example, as shown in FIG. 3, a value of a type variable of the root node is read from the type environment. If the value of the type variable of the root node does not exist in the type environment, the type variable of the root node has not been inferred. If the value of the type variable of the root node exists in the type environment, the type variable of the root node has been inferred.

The code segment #1 is used as an example. A root node of the code segment #1, which is CustomConnection, is obtained from the AST. Whether a type of CustomConnection has been inferred is determined based on the type environment.

If the type of the root node has been inferred, a current inference process may come to an end.

Further, for example, as shown in FIG. 3, if the type of the root node has been inferred, an inference result may be output. For example, the types of all fields in the code segment #1 are output.

If the type of the root node has not been inferred, step 330 is performed.

330: Create an inference item.

If step 330 is triggered by step 320, an inference item of the root node is created.

The code segment #1 is used as an example. For example, an inference item of CustomConnection may be created in step 330, and the inference item indicates an inference task of the code segment #1.

If step 330 is triggered by step 380, an inference item of a dependency is created.

340: Add the inference item to an inference queue.

For example, as shown in FIG. 3, the inference queue includes an inference item 1, an inference item 2, an inference item 3, and an inference item 4.

350: Extract a first inference item from the inference queue.

The inference queue shown in FIG. 3 is used as an example. A current first inference item is the inference item 1, and the inference item 1 is extracted from the inference queue.

After the inference item is extracted from the inference queue, an inference task indicated by the inference item is executed. The following uses the inference item of the root node as an example for description.

360: Perform type variable initialization.

Specifically, a new type variable, namely, a unique free type variable, is separately created for the to-be-inferred node.

For example, the to-be-inferred node may be a node corresponding to a class, a static variable, an instance-type variable, a function, a function parameter, a return value, or the like. In step 360, a unique free type variable may be created separately for a class, a static variable, an instance-type variable, a function, a function parameter, a return value, or the like.

For example, if an inference item being currently processed is the inference item of CustomConnection, a unique free type variable is created separately for a class, a static variable, an instance-type variable, a function, a function parameter, a return value, or the like in the code segment #1.

A code fragment of the CustomConnection class after initialization processing may be represented by the following code fragment #2.

### Code segment #2

| | |
|---|---|
| 0 | class CustomConnection(ρ): |
| 1 | _write : η |
| 2 | _read : λ |
| 3 | |
| 4 | def _send(self : CustomConnection, buf : ϕ, write : 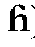 ) -> T |
| 5 | ... |
| 6 | |
| 7 | def _recv(self : CustomConnection, size : α, receiver : β) -> Υ |
| 8 | ... |

It should be understood that the foregoing code segment #2 is merely intended to intuitively show a case of creating the type variable, but not to actually change a code segment of the CustomConnection class in the code segment #1 to the code segment #2.

Herein, α, β, Υ, λ, η, ϕ, 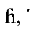 , T, and ρ are all unique free type variables. The to-be-inferred node includes _ConnectionBase, _write, _read, the method _send, the method _recv, buf, write, size, and receiver. For example, a unique free type variable ρ is created for _ConnectionBase, and a relationship between the two is _ConnectionBase: ρ. For another example, a unique free type variable η. is created for _write, and a relationship between the two is _write: η. Similarly, correspondence between other to-be-inferred nodes and unique free type variables is as follows: _read: λ; buf: ϕ; write: 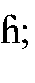 the method _send: T; size: α; receiver: β; the method _recv: Υ.

370: Obtain a constraint.

The following uses some to-be-inferred nodes in the code segment #1 as an example for description.

### (1)_ConnectionBase

A basic-class type constraint is created for _ConnectionBase.

### (2) _write and _read

(2.1) _write depends on _multiprocessing, and a resolved reference constraint is created for _multiprocessing; and _read depends on _multiprocessing, and a resolved reference constraint is created for _multiprocessing. The resolved reference constraint of _multiprocessing may be used to indicate a reference to _multiprocessing.
(2.2) An attribute reading constraint is created for _multiprocessing.send, where the attribute reading constraint of _multiprocessing.send may be used to indicate a type returned by reading the send attribute of _multiprocessing; and an attribute reading constraint is created for _multiprocessing.recv, where the attribute reading constraint of _multiprocessing.recv may be used to indicate a type returned by reading the recv attribute of _multiprocessing.
(2.3) An assignment constraint is created for "_write = _multiprocessing.send", and an assignment constraint is created for "_read = _multiprocessing.recv".

### (3) Method _send

In the method _send, a default value (_write) is assigned to the write parameter, and a default-value constraint is created for "write=_write".

Herein, write depends on _write. A resolved reference constraint is created for _write. The resolved reference constraint of _write indicates a reference to _write.

In addition, another constraint may be created in the method _send, and no further description is given herein. For a specific example, refer to the following description of the method _recv.

### (4) Method _recv

(4.1) The following constraints are created based on receiver._init_receiver(CustomConnection._read, size). In other words, receiver._init_receiver(CustomConnection._read, size) is decomposed into the following constraints.

A resolved reference constraint is created separately for receiver, CustomConnection, and size.

An attribute reading constraint is created separately for receiver._init_receiver and CustomConnection._read.

A parameter transfer constraint is created for (CustomConnection._read, size).

An invocation constraint is created for init_receiver(*).

(4.2) The following constraints are created based on return receiver.process_receive_operation(). In other words, return receiver.process_receive_operation is decomposed into the following constraints.

A resolved reference constraint is created for receiver.

An attribute reading constraint is created for receiver.process_receive_operation.

An invocation constraint is created for process_receive_operation().

A return constraint is created for a return value of _recv.

Constraints related to the type variables generated in step 360 may be collected in step 370, and then processing may be performed based on these constraints to obtain inference results of these type variables.

380: Perform dependency check.

Dependency check includes processing the resolved reference constraint for the current inference item. Specifically, this is to check whether inference of the types of all dependencies of the current inference item has been completed.

If a dependency has not been inferred, current processing is stopped, to turn to inference of a type of the dependency. The type of the dependency may be obtained by using the method in embodiments of this application. For example, steps 330 to 390 are performed for the dependency, to obtain the type of the dependency.

If there is no inference item for which inference has not been completed, for example, after the inference of the types of all dependencies of the current inference item is completed, step 390 is performed.

The constraints in step 370 are used as an example. It is assumed that the dependencies of CustomConnection are all the dependencies indicated by the resolved reference constraint in step 370. The dependencies are as follows:
(a1) _multiprocessing, which comes from _multiprocessing.send and _multiprocessing.recv;
(a2) _write, which comes from write=_write;
(a3) receiver, CustomConnection, and size, which come from receiver.init_receiver(CustomConnection._read, size); and
(a4) receiver, which comes from receiver.process_receive_operation().

Herein, receiver in (a3) and receiver (a4) are a same dependency.

It is determined whether inference has been completed for the types of all of _multiprocessing, _write, receiver, CustomConnection, and size.

If there is a dependency for which inference has not been completed in _multiprocessing, _write, receiver, CustomConnection, and size, the current processing is stopped, to turn to inference of a type of the dependency.

It is assumed that inference has not been completed for the size dependency. Then the current processing (that is, processing of the inference item of CustomConnection) is stopped, to turn to inference of a type of size. For example, an inference item of size is created, and this inference item indicates an inference task of size. The inference item of size is added to the inference queue. After the inference item of size is obtained, a constraint is obtained and an inference result of size is obtained based on the constraint. For a specific inference process, refer to descriptions of steps 330 to 390. To avoid repetition, details are not described herein again.

The foregoing is only an example. If there are a plurality of dependencies for which inference has not been completed in _multiprocessing, _write, receiver, CustomConnection, and size, the types of the dependencies are separately inferred. For example, if inference has been completed for none of the types of _multiprocessing, _write, receiver, CustomConnection, and size, an inference item of _multiprocessing, an inference item of _write, an inference item of receiver, an inference item of CustomConnection, and an inference item of size may be separately created, and these inference items are added to the inference queue. After an inference item is obtained from the inference queue, a corresponding inference task is executed.

After inference is completed for all dependencies of the inference item of CustomConnection, that is, after inference is completed for the types of all of _multiprocessing, _write, receiver, CustomConnection, and size, step 390 is performed.

390: Perform inference processing.

In step 390, a constraint other than the resolved reference constraint of the current inference item may be processed to obtain an inference result.

The following uses the code fragment "read = _multiprocessing.recv" and a code fragment of the method _recv as an example for description.

### (1) _read = _multiprocessing.recv

As described previously, constraints related to the foregoing code fragment include: a resolved reference constraint of _multiprocessing, an attribute reading constraint of _multiprocessing.recv, and an assignment constraint of _read = _multiprocessing.recv.

The resolved reference constraint of _multiprocessing has been processed in step 380, and the type of _multiprocessing is obtained as a _multiprocessing package.

A type of the attribute recv function is determined from the type (namely, the _multiprocessing package) of _multiprocessing based on the attribute reading constraint of _multiprocessing.recv.

A type on a left-hand side of "=" and a type on a right-hand side of "=" are unified based on the assignment constraint of _read = _multiprocessing.recv. The type on the left-hand side of "=" is the type of _read, and is a unique free type variable λ. It is assumed that the type on the right-hand side of "=" is a type B. Then a unification result may be represented as 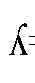 ={B}, indicating that the unique free type variable λ includes the type B.

### (2) Method _recv

### (2.1) receiver._init_receiver(CustomConnection._read, size)

As described previously, constraints related to the code fragment receiver._init_receiver(CustomConnection._read, size) include: a resolved reference constraint of receiver, a resolved reference constraint of CustomConnection, a resolved reference constraint of size, an attribute reading constraint of receiver._init_receiver, an attribute reading constraint of CustomConnection._read, a parameter transfer constraint of (CustomConnection._read, size), and an invocation constraint of init_receiver(*).

The resolved reference constraint of receiver, the resolved reference constraint of CustomConnection, and the resolved reference constraint of size have been processed in step 380.

A type of the _read attribute is determined from the type of CustomConnection based on the attribute reading constraint of CustomConnection._read.

A type of the _init_receiver attribute is determined from the type of receiver based on the attribute reading constraint of receiver._init_receiver. As described previously, receiver is a unique free type variable β. When a type of an attribute is requested from a unique free type variable, it may be determined that the unique free type variable includes the type of the attribute. Accordingly, β includes the type of _init_receiver. It is determined, based on the invocation constraint of init_receiver (*), that the type of _init_receiver is a callable (callable) function, and then β={_init_receiver : Callable} is obtained, indicating that β includes the type of _init_receiver and the type of _init_receiver is the callable function. A type of a parameter of _init_receiver may be obtained based on the parameter transfer constraint of (CustomConnection._read, size).

### (2.2) return receiver.process_receive_operation()

As described previously, constraints related to the code fragment return receiver.process_receive_operation() include: a resolved reference constraint of receiver, an attribute reading constraint of receiver.process_receive_operation, an invocation constraint of process_receive_operation(), and a return constraint of a return value of _recv.

The resolved reference constraint of receiver has been processed in step 380.

The type of receiver obtained in (2.1) is represented as β={_init_receiver: Callable}.

A type of the process_receive_operation attribute is determined from the type of receiver based on the attribute reading constraint of receiver.process_receive_operation. Accordingly, β includes the type of process_receive_operation, and β={_init_receiver : Callable} is modified to β={_init_receiver : Callable, process_receive_operation}.

It is determined, based on the invocation constraint of process_receive_operation(), that process_receive_operation is a callable function, namely, process_receive_operation : Callable. The type of receiver is modified on this basis to obtain β={_init_receiver : Callable, process_receive_operation : Callable}.

It is determined, based on the return constraint of the return value of _recv, that a return type of the method _recv is a return type invoked when the method process_receive_operation is run. The return type of the method _recv is a unique free type variable Υ, that is, Υ is the return type invoked when the method process_receive_operation is run.

For example, after the processing based on the foregoing constraints is completed, an inference result of the method _recv is obtained as follows:

```
          def _recv(
          self : CustomConnection,
              size : T0,
          receiver : { _init_receiver : Callable[[CustomConnection._read, T0], Any],
                        process_receive_operation: Callable [[],T1]}) -> T1
```

Herein, T0 represents the type of size, and T0 is an unknown type. T1 represents the return type of the method process_receive_operation, namely, the return type of the method _recv. T1 is an unknown type. Any represents an unknown type.

Herein, _init_receiver : Callable[[CustomConnection._read, T0], Any] represents that init_receiver is a callable function, parameter types are CustomConnection._read and T0, and the return type is an unknown type.

Herein, process_receive_operation: Callable [[],T1] represents that process_receive_operation is a callable function, there is no parameter, and the return type is T1.

The inference result obtained in step 390 may be stored into the type environment.

400: Output the inference result, where the inference result may indicate the type of the to-be-inferred node.

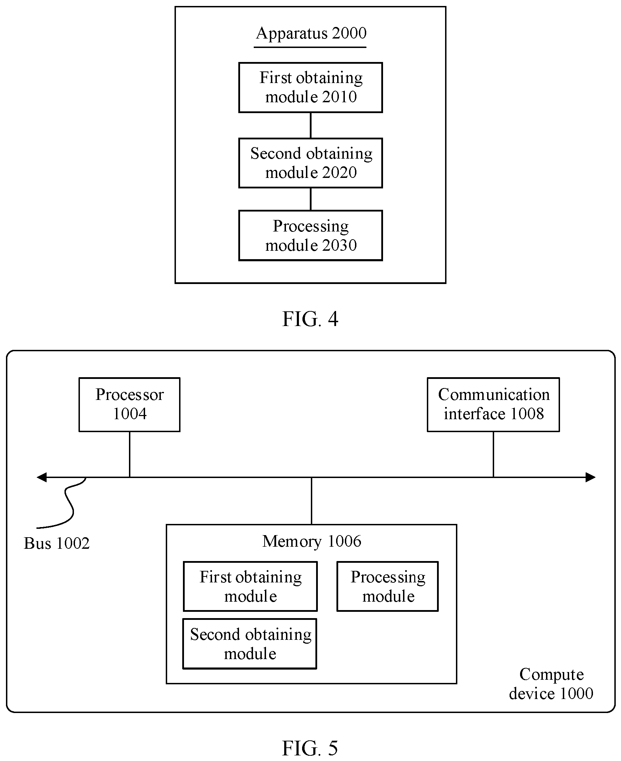

The following describes apparatuses in embodiments of this application with reference to FIG. 4 to FIG. 7. It should be understood that the apparatuses described below can perform the methods in the foregoing embodiments of this application. To avoid repetition, repetitive descriptions of the apparatuses in embodiments of this application described below are omitted appropriately.

FIG. 4 is a block diagram of an apparatus for type inference of a programming language according to an embodiment of this application. The apparatus 2000 shown in FIG. 4 may be configured to perform the method shown in FIG. 1 or FIG. 3. The apparatus 2000 includes a first obtaining module 2010, a second obtaining module 2020, and a processing module 2030.

In a possible implementation, the apparatus 2000 may be configured to perform the method shown in FIG. 1.

The first obtaining module 2010 is configured to obtain a to-be-inferred node in an abstract syntax tree, where the to-be-inferred node corresponds to a to-be-inferred field in program code. The to-be-inferred field is one of the following: a variable, a class, a function, or a parameter.

The second obtaining module 2020 is configured to obtain a constraint related to the to-be-inferred node, where the constraint indicates a relationship related to the to-be-inferred node in the abstract syntax tree.

The processing module 2030 is configured to determine a type of the to-be-inferred node based on the constraint. The type of the to-be-inferred node is one of the following: a number type, a sequence type, a mapping type, a set type, an iterator type, a context manager type, a module type, a metaclass type, a none type, or a callable type.

The first obtaining module 2010 and the second obtaining module 2020 may be a same module, or may be different modules.

Optionally, the type of the to-be-inferred node is used for at least one of the following: displaying the type of the to-be-inferred node, code completion, code refactoring, code inspection, or quick fix.

Optionally, the first obtaining module 2010 is specifically configured to: extract a first inference item from an inference queue, where the first inference item is used to determine the type of the to-be-inferred node, and the inference queue includes one or more inference items; and obtain the to-be-inferred node.

Optionally, the constraint includes a resolved reference constraint of a first node in the abstract syntax tree, where the resolved reference constraint of the first node indicates a reference relationship of the to-be-inferred node to the first node. The apparatus 2000 further includes a third obtaining module (not shown in the figure), configured to obtain a type of the first node, and the processing module 2030 is specifically configured to determine the type of the to-be-inferred node based on the type of the first node and the constraint.

Optionally, the constraint includes an assignment constraint of a second node, the assignment constraint of the second node indicates an assignment relationship related to the second node, and a type of a child node to which a value is assigned in the second node is determined based on a type on a right-hand side of an assignment operator.

Optionally, the constraint includes an attribute reading constraint of a third node, the attribute reading constraint of the third node indicates a subordinate relationship related to the third node, and a type of an owner of an attribute in the third node includes a type of the attribute.

Optionally, the apparatus 2000 further includes a creation module (not shown in the figure), configured to create a type variable corresponding to the to-be-inferred node; and the processing module 2030 is specifically configured to determine, based on the constraint, a value of the type variable corresponding to the to-be-inferred node, where the value of the type variable corresponding to the to-be-inferred node indicates the type of the to-be-inferred node.

Optionally, the apparatus 2000 further includes a storage module (not shown in the figure), configured to store the type of the to-be-inferred node into a type environment, where the type environment is used to store the types of nodes in the abstract syntax tree.

Each module in the apparatus 2000 may be implemented by using software or hardware. For example, the following uses the processing module 2030 as an example to describe an implementation of the processing module 2030. Similarly, for implementations of the other modules, refer to the implementation of the processing module 2030.

A module is used as an example of a software functional unit, and the processing module 2030 may include code run on a compute instance. The compute instance may include at least one of a physical host (a compute device), a virtual machine, or a container. Further, there may be one or more compute instances. For example, the processing module 2030 may include code run on a plurality of hosts/virtual machines/containers. It should be noted that the plurality of hosts/virtual machines/containers used to run the code may be distributed in a same region (region), or may be distributed in different regions. Further, the plurality of hosts/virtual machines/containers configured to run the code may be distributed in a same availability zone (availability zone, AZ), or may be distributed in different AZs. Each AZ includes one data center or a plurality of data centers that are geographically close to each other. Usually, one region may include a plurality of AZs.

Similarly, the plurality of hosts/virtual machines/containers configured to run the code may be distributed in a same virtual private cloud (virtual private cloud, VPC), or may be distributed in a plurality of VPCs. Usually, one VPC is deployed in one region. A communication gateway needs to be deployed in each VPC for communication between two VPCs in a same region or between VPCs in different regions. Interconnection between the VPCs is implemented through the communication gateways.

A module is used as an example of a hardware functional unit, and the processing module 2030 may include at least one compute device such as a server. Alternatively, the processing module 2030 may be a device or the like implemented by using an application-specific integrated circuit (application-specific integrated circuit, ASIC) or a programmable logic device (programmable logic device, PLD). The PLD may be implemented by using a complex programmable logic device (complex programmable logic device, CPLD), a field-programmable gate array (field-programmable gate array, FPGA), generic array logic (generic array logic, GAL), or any combination thereof.

The plurality of compute devices included in the processing module 2030 may be distributed in a same region, or may be distributed in different regions. The plurality of compute devices included in the processing module 2030 may be distributed in a same AZ, or may be distributed in different AZs. Similarly, the plurality of compute devices included in the processing module 2030 may be distributed in a same VPC, or may be distributed in a plurality of VPCs. The plurality of compute devices may be any combination of compute devices such as a server, an ASIC, a PLD, a CPLD, an FPGA, and GAL.

It should be noted that, in another embodiment, the processing module 2030 may be configured to perform any step in the method for type inference of a programming language, the first obtaining module 2010 may be configured to perform any step in the method for type inference of a programming language, the second obtaining module 2020 may be configured to perform any step in the method for type inference of a programming language, and steps implemented by the modules may be specified according to a requirement. The modules implement all functions of the apparatus 2000 by implementing different steps in the method for type inference of a programming language.

This application further provides a compute device 1000. As shown in FIG. 5, the compute device 1000 includes a bus 1002, a processor 1004, a memory 1006, and a communication interface 1008. The processor 1004, the memory 1006, and the communication interface 1008 communicate with each other through the bus 1002. The compute device 1000 may be a server or a terminal device. It should be understood that quantities of processors and memories in the compute device 1000 are not limited in this application.

The bus 1002 may be a peripheral component interconnect (peripheral component interconnect, PCI) bus, an extended industry standard architecture (extended industry standard architecture, EISA) bus, or the like. Buses may be classified into an address bus, a data bus, a control bus, and the like. For ease of representation, the bus is represented by using only one line in FIG. 5. However, this does not mean that there is only one bus or only one type of bus. The bus 1002 may include a path for information transfer between various components (for example, the memory 1006, the processor 1004, and the communication interface 1008) of the compute device 1000.

The processor 1004 may include any one or more of processors, such as a central processing unit (central processing unit, CPU), a graphics processing unit (graphics processing unit, GPU), a microprocessor (microprocessor, MP), or a digital signal processor (digital signal processor, DSP).

The memory 1006 may include a volatile memory (volatile memory), for example, a random access memory (random access memory, RAM). The processor 1004 may further include a non-volatile memory (non-volatile memory), for example, a read-only memory (read-only memory, ROM), a flash memory, a hard disk drive (hard disk drive, HDD), or a solid-state drive (solid-state drive, SSD).

The memory 1006 stores executable program code, and the processor 1004 executes the executable program code to separately implement functions of the first obtaining module 2010, the second obtaining module 2020, and the processing module 2030, to implement the method for type inference of a programming language. In other words, the memory 1006 stores instructions for performing the method for type inference of a programming language.

The communication interface 1008 uses a transceiver module, for example, but not limited to, a network interface card or a transceiver, to implement communication between the compute device 1000 and another device or a communication network.

An embodiment of this application further provides a compute device cluster. The compute device cluster includes at least one compute device. The compute device may be a server, for example, a central server, an edge server, or a local server in a local data center. In some embodiments, the compute device may alternatively be a terminal device, for example, a desktop computer, a notebook computer, or a smartphone.

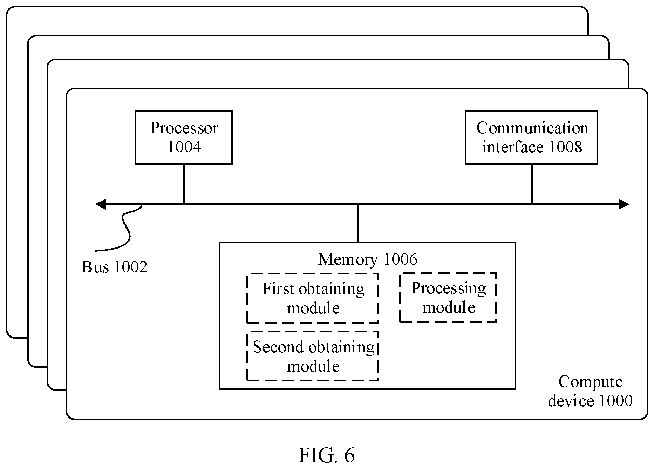

As shown in FIG. 6, the compute device cluster includes at least one compute device 1000. A memory 1006 in one or more compute devices 1000 in the compute device cluster may store same instructions for performing the method for type inference of a programming language.

In some possible implementations, the memory 1006 in the one or more compute devices 1000 in the compute device cluster each may alternatively store a part of the instructions for performing the method for type inference of a programming language. In other words, a combination of one or more compute devices 1000 may collectively execute the instructions for performing the method for type inference of a programming language.

It should be noted that memories 1006 in different compute devices 1000 in the compute device cluster may store different instructions for separately executing some functions of the apparatus for type inference of a programming language. In other words, the instructions stored in the memories 1006 in different compute devices 1000 may implement functions of one or more of the first obtaining module 2010, the second obtaining module 2020, and the processing module 2030.

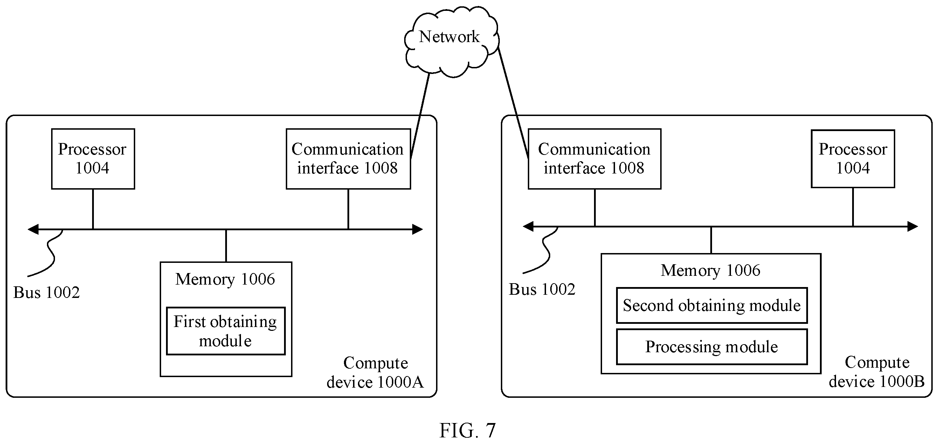

In some possible implementations, the one or more compute devices in the compute device cluster may be connected through a network. The network may be a wide area network, a local area network, or the like. FIG. 7 shows a possible implementation. As shown in FIG. 7, two compute devices 1000A and 1000B are connected to each other through a network. Specifically, each compute device is connected to the network through a communication interface in the compute device. In this type of possible implementations, a memory 1006 of the compute device 1000A stores instructions for performing functions of the first obtaining module 2010, and a memory 1006 of the compute device 1000B stores instructions for executing functions of the processing module 2030 and the second obtaining module 2020.

A connection manner between the compute device clusters shown in FIG. 7 may be to consider delivering the functions implemented by the processing module 2030 and the second obtaining module 2020 to the compute device 1000B for execution, considering that data may need to be stored in the method for type inference of a programming language provided in this application.

It should be understood that functions of the compute device 1000A shown in FIG. 7 may alternatively be completed by a plurality of compute devices 1000. Similarly, functions of the compute device 1000B may alternatively be completed by a plurality of compute devices 1000.

An embodiment of this application further provides a computer program product including instructions. The computer program product may be software or a program product that includes the instructions and that can run on a compute device or can be stored in any usable medium. When the computer program product runs on at least one compute device, the at least one compute device is enabled to perform the method for type inference of a programming language.

An embodiment of this application further provides a computer-readable storage medium. The computer-readable storage medium may be any usable medium that can be stored by a compute device, or a data storage device such as a data center including one or more usable media. The usable medium may be a magnetic medium (for example, a floppy disk, a hard disk, or a magnetic tape), an optical medium (for example, a DVD), a semiconductor medium (for example, a solid-state drive), or the like. The computer-readable storage medium includes instructions for instructing a compute device to perform the method for type inference of a programming language.

Finally, it should be noted that the foregoing embodiments are merely intended for describing the technical solutions of this application, but not for limiting this application. Although this application is described in detail with reference to the foregoing embodiments, a person of ordinary skill in the art should understand that modifications may still be made to the technical solutions described in the foregoing embodiments or equivalent replacements may be made to some technical features thereof, without departing from the protection scope of the technical solutions in embodiments of this application.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, reference may be made to a corresponding process in the foregoing method embodiments. Details are not described herein.

In the several embodiments provided in this application, it should be understood that the disclosed system, apparatus, and method may be implemented in other manners. For example, the described apparatus embodiments are merely examples. For example, division into the units is merely logical function division and there may be another division manner during actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented electronically, mechanically, or in other forms.

The units described as separate parts may or may not be physically separate, and parts displayed as units may or may not be physical units, may be located at one position, or may be distributed on a plurality of network units. Some or all of the units may be selected based on actual requirements to achieve the objectives of the solutions of embodiments.

In addition, functional units in embodiments of this application may be integrated into one processing unit, or each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, the part contributing to the conventional technology, or a part of the technical solutions may be implemented in a form of a software product. The computer software product is stored in a storage medium, and includes several instructions for enabling a computer device (which may be a personal computer, a server, a network device, or the like) to perform all or some of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A method for type inference of a programming language, wherein the method is applied to an integrated development environment IDE, and the method comprises:
obtaining a to-be-inferred node in an abstract syntax tree during development of program code, wherein the to-be-inferred node indicates a to-be-inferred field in the program code, and the to-be-inferred field is one of the following: a variable, a class, a function, or a parameter;
obtaining a constraint related to the to-be-inferred node, wherein the constraint indicates a relationship related to the to-be-inferred node in the abstract syntax tree; and
determining a type of the to-be-inferred node based on the constraint, wherein the type of the to-be-inferred node is one of the following: a number type, a sequence type, a mapping type, a set type, an iterator type, a context manager type, a module type, a metaclass type, a none type, or a callable type.

2. The method according to claim 1, wherein the type of the to-be-inferred node is used for at least one of the following: displaying the type of the to-be-inferred node, code completion, code refactoring, code inspection, or quick fix.

3. The method according to claim 1 or 2, wherein obtaining the to-be-inferred node in the abstract syntax tree comprises:
extracting a first inference item from an inference queue, wherein the first inference item is used to determine the type of the to-be-inferred node, and the inference queue comprises one or more inference items; and
obtaining the to-be-inferred node.

4. The method according to any one of claims 1 to 3, wherein the constraint comprises a resolved reference constraint of a first node in the abstract syntax tree, the resolved reference constraint of the first node indicates a reference relationship of the to-be-inferred node to the first node, and the method further comprises:
obtaining a type of the first node; and determining the type of the to-be-inferred node based on the constraint comprises:
determining the type of the to-be-inferred node based on the type of the first node and the constraint.

5. The method according to any one of claims 1 to 4, wherein the constraint comprises an assignment constraint of a second node, the assignment constraint of the second node indicates an assignment relationship related to the second node, and a type of a child node to which a value is assigned in the second node is determined based on a type on a right-hand side of an assignment operator.

6. The method according to any one of claims 1 to 5, wherein the constraint comprises an attribute reading constraint of a third node, the attribute reading constraint of the third node indicates a subordinate relationship related to the third node, and a type of an owner of an attribute in the third node comprises a type of the attribute.

7. The method according to any one of claims 1 to 6, wherein the method further comprises:
creating a type variable corresponding to the to-be-inferred node; and
determining the type of the to-be-inferred node based on the constraint comprises:
determining, based on the constraint, a value of the type variable corresponding to the to-be-inferred node, wherein the value of the type variable corresponding to the to-be-inferred node indicates the type of the to-be-inferred node.

8. The method according to any one of claims 1 to 7, wherein the method further comprises:
storing the type of the to-be-inferred node into a type environment, wherein the type environment is used to store types of nodes in the abstract syntax tree.

9. An apparatus for type inference of a programming language, wherein the apparatus is applied to an integrated development environment IDE, and the apparatus comprises:
a first obtaining module, configured to obtain a to-be-inferred node in an abstract syntax tree during development of program code, wherein the to-be-inferred node indicates a to-be-inferred field in the program code, and the to-be-inferred field is one of the following: a variable, a class, a function, or a parameter;
a second obtaining module, configured to obtain a constraint related to the to-be-inferred node, wherein the constraint indicates a relationship related to the to-be-inferred node in the abstract syntax tree; and
a processing module, configured to determine a type of the to-be-inferred node based on the constraint, wherein the type of the to-be-inferred node is one of the following: a number type, a sequence type, a mapping type, a set type, an iterator type, a context manager type, a module type, a metaclass type, a none type, or a callable type.

10. The apparatus according to claim 9, wherein the type of the to-be-inferred node is used for at least one of the following: displaying the type of the to-be-inferred node, code completion, code refactoring, code inspection, or quick fix.

11. The apparatus according to claim 9 or 10, wherein the first obtaining module is specifically configured to:
extract a first inference item from an inference queue, wherein the first inference item is used to determine the type of the to-be-inferred node, and the inference queue comprises one or more inference items; and
obtain the to-be-inferred node.

12. The apparatus according to any one of claims 9 to 11, wherein the constraint comprises a resolved reference constraint of a first node in the abstract syntax tree, the resolved reference constraint of the first node indicates a reference relationship of the to-be-inferred node to the first node, the apparatus further comprises a third obtaining module configured to obtain a type of the first node, and the processing module is specifically configured to:
determine the type of the to-be-inferred node based on the type of the first node and the constraint.

13. The apparatus according to any one of claims 9 to 12, wherein the constraint comprises an assignment constraint of a second node, the assignment constraint of the second node indicates an assignment relationship related to the second node, and a type of a child node to which a value is assigned in the second node is determined based on a type on a right-hand side of an assignment operator.

14. The apparatus according to any one of claims 9 to 13, wherein the constraint comprises an attribute reading constraint of a third node, the attribute reading constraint of the third node indicates a subordinate relationship related to the third node, and a type of an owner of an attribute in the third node comprises a type of the attribute.

15. The apparatus according to any one of claims 9 to 14, wherein the apparatus further comprises a creation module, configured to:
create a type variable corresponding to the to-be-inferred node; and
the processing module is specifically configured to:
determine, based on the constraint, a value of the type variable corresponding to the to-be-inferred node, wherein the value of the type variable corresponding to the to-be-inferred node indicates the type of the to-be-inferred node.

16. The apparatus according to any one of claims 9 to 15, wherein the apparatus further comprises a storage module configured to store the type of the to-be-inferred node into a type environment, and the type environment is used to store the types of nodes in the abstract syntax tree.

17. A compute device cluster, comprising at least one compute device, wherein each compute device comprises a processor and a memory; and
the processor of the at least one compute device is configured to execute instructions stored in the memory of the at least one compute device, to enable the compute device cluster to perform the method according to any one of claims 1 to 8.

18. A computer-readable storage medium, comprising computer program instructions, wherein when the computer program instructions are executed by a compute device cluster, the compute device cluster performs the method according to any one of claims 1 to 8.

19. A computer program product comprising instructions, wherein when the instructions are run by a compute device cluster, the compute device cluster is enabled to perform the method according to any one of claims 1 to 8.
